# FASCICULE DE BREVET EUROPEEN

(11) **EP 4 430 323 B1**
(45) Date de publication et mention de la délivrance du brevet: **10.09.2025**
(21) Numéro de dépôt: 22803042.5
(22) Date de dépôt: 25.10.2022
(51) Int. Cl.: F16H 55/50, B61B 12/02

(54) **DISPOSITIF POUR UNE POULIE DE GUIDAGE DE CÂBLE**
VORRICHTUNG FÜR EINE KABELFÜHRUNGSROLLE
DEVICE FOR A CABLE GUIDE PULLEY

(30) Priorité: 08.11.2021 FR 2111831
(43) Date de publication de la demande: 18.09.2024
(73) Titulaire: COMPAGNIE GENERALE DES ETABLISSEMENTS MICHELIN, 63000 Clermont-Ferrand (FR)
(72) Inventeur: SOUYRI, Philippe, 63040 CLERMONT-FERRAND Cedex 9 (FR); DEAN, David, 63040 CLERMONT-FERRAND Cedex 9 (FR); HENNEBERT, Guillaume, 63040 CLERMONT-FERRAND Cedex 9 (FR)
(74) Mandataire: M.F.P. Michelin
(86) Numéro de dépôt international: PCT/FR2022/052024
(87) Numéro de publication internationale: WO 2023/079228

(56) Documents cités:
- EP-A1- 0 194 948
- DE-A1- 19 816 327
- FR-A- 1 265 904

## Description

La présente invention se rapporte à un dispositif pour une poulie de guidage de câble. L'invention se rapporte, en particulier, à un dispositif destiné à former une garniture de la poulie de guidage de câble.

Un dispositif, une poulie de guidage de câble, auxquels se rapporte la présente invention, des objets sont habituellement décrits par une représentation dans un plan méridien, c'est-à-dire un plan contenant un axe de rotation de la poulie de guidage de câble. Tous ces produits (le dispositif et la poulie de guidage de câble) sont des objets ayant une géométrie de révolution par rapport à leur axe de rotation.

Les systèmes de transport par câble comprennent normalement un câble tracteur étendu le long d'un chemin donné ; au moins une unité de transport mobile le long du chemin et pouvant être raccordée au câble tracteur par un dispositif d'accouplement ; une structure de support placée le long du chemin pour supporter et guider l'unité de transport ; et au moins une poulie de guidage de câble installée sur la structure de support. Les systèmes de transport par câble du type ci-dessus comprennent à la fois les systèmes sur rails et suspendus.

La poulie de guidage de câble est pourvue d'un dispositif (garniture), également appelé « enveloppe » ou « bande », destiné à être en contact direct avec le câble tracteur. Le dispositif (garniture) est principalement composé, à l'exception d'une partie extrême intérieure du dispositif (garniture) destinée à être en contact avec une surface extérieure de la poulie de guidage de câble (une couche de semelle), d'une seule composition élastomère pour une meilleure adhérence avec le câble tracteur et pour absorber les vibrations générées par le biais du câble tracteur et/ou de la structure de support transmises par le câble tracteur, tout en résistant à l'attaque mécanique du câble tracteur qui entraîne la génération de fissures sur une surface du dispositif (garniture) en raison de la fatigue mécanique.

Afin d'améliorer de telles fonctions du dispositif (garniture), on sait qu'une rigidification du dispositif (garniture) est efficace, notamment pour la résistance à l'attaque mécanique du câble tracteur. Diverses solutions ont été proposées pour améliorer ces fonctions.

Le document EP0194948 décrit un dispositif répartiteur de contrainte destiné à former le dispositif (garniture) d'une poulie de guidage de câble dans un système de transport aérien, le dispositif (garniture) comprend au moins deux couches de matériaux déformables élastiquement de dureté décroissante, une couche en contact avec le câble étant faite d'un matériau anti-abrasif ayant une dureté Shore de plus de 60, et une sous-couche en contact avec la gorge de la poulie étant faite d'un matériau flexible et élastique ayant une dureté Shore d'au plus 70.

Le document DE202015006091 décrit un pneumatique pour une poulie pour câble, en particulier dans une poulie d'entraînement de câble ou un galet de guidage de câble, pour des moyens de transport par câble de personnes ou de matériaux, comportant une bague extérieure située radialement vers l'extérieur et une bague intérieure située radialement vers l'intérieur, une surface périphérique extérieure de la bague extérieure une gorge pour câble est formée et la bague intérieure pour l'installation sur une poulie de roue placée à l'intérieur, la bague extérieure présentant une dureté supérieure à celle de la bague intérieure et la bague intérieure présentant une élasticité supérieure à celle de la bague extérieure et la bague extérieure étant fixée à la bague intérieure, notamment par collage, comportant un élément de raccordement.

Toutefois, avec les solutions divulguées dans ces documents, une amélioration des fonctions identifiées ci-dessus, notamment la résistance à l'attaque mécanique du câble tracteur, n'est pas satisfaisante. D'un autre côté, la rigidification du dispositif (garniture) entraîne souvent une dégradation de l'adhérence avec le câble tracteur.

Par conséquent, le dispositif destiné à former le dispositif (garniture) de la poulie de guidage de câble, qui résiste mieux à l'attaque mécanique du câble tracteur tout en maintenant l'adhérence avec le câble tracteur, est nécessaire.

Une « direction/orientation radiale » est une direction/orientation perpendiculaire à l'axe de rotation de la poulie de guidage de câble. Cette direction/orientation correspond à l'orientation d'épaisseur du dispositif (garniture).

Une « direction/orientation axiale » est une direction/orientation parallèle à l'axe de rotation de la poulie de guidage de câble.

Une « direction/orientation circonférentielle » est une direction/orientation qui est tangente à tout cercle centré sur l'axe de rotation. Cette direction/orientation est perpendiculaire à la fois à la direction/orientation axiale et à la direction/orientation radiale.

Un « module MA10 » est une contrainte de traction (en MPa) pour un allongement de dix pour cent (10 %) à une température de 23 °C mesurée selon la norme ASTM D412.

Un « allongement à la rupture » est une valeur de déformation par allongement jusqu'à rupture déterminée sur la base d'une mesure de traction.

Les essais de traction permettent de déterminer les courbes des contraintes/allongements et les propriétés à la rupture. Ces essais sont effectués selon la norme française NF T 46-002 de Septembre 1988. Les mesures de traction sont réalisées à 60 °C, et dans des conditions normales d'humidité (50 ± 10 % d'humidité relative). L'allongement à la rupture est exprimé en pourcentages.

Un objet de l'invention est donc de concevoir un dispositif destiné à former un dispositif (garniture) d'une poulie de guidage de câble, et que ce dispositif (garniture) puisse offrir une amélioration en termes de résistance à l'attaque mécanique du câble tracteur tout en maintenant l'adhérence avec le câble tracteur.

La présente invention concerne un dispositif avec les caractéristiques de la revendication 1.

Cette structure offre une amélioration en termes de résistance à l'attaque mécanique du câble tracteur tout en maintenant l'adhérence avec le câble tracteur.

Étant donné que le dispositif comprenant au moins 2 volumes, le volume extérieur exposé au niveau de la face extérieure au moins partiellement et contenant la gorge, et le volume principal exposé au niveau de la face intérieure au moins partiellement, et le module d'allongement MA10 selon ASTM D412 mesuré pour un allongement de 10 pour cent et à une température de 23 °C de la composition élastomère constituant le volume extérieur est inférieur au module d'allongement MA10 de la composition élastomère constituant le volume principal, le module MA10 inférieur a de meilleures caractéristiques en termes d'allongement avant rupture associées à une plus grande résistance à la fatigue pour un niveau imposé de déformation. Une résistance à l'attaque mécanique du câble tracteur est, par conséquent, possible.

D'autre part, étant donné que la composition élastomère ayant le module MA10 inférieur a de meilleures propriétés d'acheminement de câble. Par conséquent, il est possible, simultanément, de maintenir et même d'améliorer l'adhérence avec le câble tracteur.

En outre, étant donné que le module MA10 supérieur de la composition élastomère constituant le volume principal réduit la déformation du dispositif (garniture), il en résulte que le volume principal subirait une fatigue moindre. Une résistance à l'attaque mécanique du câble tracteur est, par conséquent, possible.

Étant donné que l'épaisseur radiale (to) du volume extérieur mesurée au niveau du centre axial de la gorge est inférieure à 0,5 fois l'épaisseur (t) du dispositif, le dispositif subirait globalement une fatigue moindre. Une résistance à l'attaque mécanique du câble tracteur est, par conséquent, possible.

Dans un autre mode de réalisation préféré, l'épaisseur radiale (to) du volume extérieur est supérieure à 0,1 fois l'épaisseur (t) du dispositif.

Si cette épaisseur radiale (to) du volume extérieur est inférieure ou égale à 0,1 fois l'épaisseur (t) du dispositif, il existe un risque que le volume du volume extérieur devienne insuffisant pour résister à la fatigue provoquée par la déformation imposée par le câble tracteur. En établissant cette épaisseur radiale (to) du volume extérieur à une valeur supérieure à 0,1 fois l'épaisseur (t) du dispositif, une résistance à l'attaque mécanique du câble tracteur est possible tout en maintenant l'adhérence avec le câble tracteur.

Cette épaisseur radiale (to) du volume extérieur est, de préférence, supérieure à 0,15 fois l'épaisseur (t) du dispositif, plus préférablement supérieure à 0,2 fois l'épaisseur (t) du dispositif, encore plus préférablement supérieure à 0,25 fois l'épaisseur (t) du dispositif et, en particulier, supérieure ou égale à 0,3 fois l'épaisseur (t) du dispositif.

Dans un autre mode de réalisation préféré, le module d'allongement MA10 de la composition élastomère constituant le volume principal est supérieur d'au moins 25 % au module d'allongement MA10 de la composition élastomère constituant le volume extérieur.

Si ce module d'allongement MA10 de la composition élastomère constituant le volume principal est supérieur de moins de 25 % au module d'allongement MA10 de la composition élastomère constituant le volume extérieur, il existe un risque que la réduction de la déformation au niveau du volume principal devienne insuffisante pour subir une fatigue moindre. En établissant ce module d'allongement MA10 de la composition élastomère constituant le volume principal de sorte qu'il soit supérieur d'au moins 25 % au module d'allongement MA10 de la composition élastomère constituant le volume extérieur, une résistance à l'attaque mécanique du câble tracteur est possible.

Ce module d'allongement MA10 de la composition élastomère constituant le volume principal est, de préférence, supérieur d'au moins 30 % au module d'allongement MA10 de la composition élastomère constituant le volume extérieur, plus préférablement supérieur d'au moins 35 % au module d'allongement MA10 de la composition élastomère constituant le volume extérieur, encore plus préférablement supérieur d'au moins 40 % au module d'allongement MA10 de la composition élastomère constituant le volume extérieur.

Le volume extérieur est exposé au niveau de la totalité de la face extérieure.

Avec cette structure, il est possible de fabriquer le dispositif facilement et efficacement.

Le volume intérieur est exposé au niveau de la totalité de la face intérieure.

Avec cette structure, il est possible de fabriquer le dispositif facilement et efficacement.

Dans un autre mode de réalisation préféré, le dispositif comprend en outre un volume intermédiaire qui n'est pas exposé au niveau de la face extérieure, et une composition élastomère constituant le volume intermédiaire est différente à la fois de la composition élastomère constituant le volume extérieur et de la composition élastomère constituant le volume principal.

Avec cette structure, une résistance efficace et effective à l'attaque mécanique du câble tracteur est possible, puisqu'il est possible de conférer une fonction différente à la composition élastomère constituant le volume intermédiaire, telle qu'une faible perte d'énergie afin de limiter la surchauffe ou un module propre à supporter des charges afin de limiter la déformation du dispositif (garniture).

Dans un autre mode de réalisation préféré, un module d'allongement MA10 d'une composition élastomère constituant le volume intermédiaire est inférieur à celui de la composition élastomère constituant le volume principal et supérieur à celui de la composition élastomère constituant le volume extérieur.

Avec cette structure, une résistance efficace et effective à l'attaque mécanique du câble tracteur est possible, puisque le volume intermédiaire peut être apte à supporter des charges afin de limiter la déformation du dispositif (garniture).

Dans un autre mode de réalisation préféré, le module d'allongement MA10 de la composition élastomère constituant le volume intermédiaire est inférieur d'au moins 20 % au module d'allongement MA10 de la composition élastomère constituant le volume principal.

Si ce module d'allongement MA10 de la composition élastomère constituant le volume intermédiaire est inférieur de moins de 20 % au module d'allongement MA10 de la composition élastomère constituant le volume principal, il existe un risque que le volume intermédiaire ne puisse pas bien contribuer à la résistance à l'attaque mécanique du câble tracteur. En établissant ce module d'allongement MA10 de la composition élastomère constituant le volume intermédiaire de sorte qu'il soit inférieur d'au moins 20 % au module d'allongement MA10 de la composition élastomère constituant le volume principal, une résistance efficace à l'attaque mécanique du câble tracteur est possible.

Ce module d'allongement MA10 de la composition élastomère constituant le volume intermédiaire est, de préférence, inférieur d'au moins 25 % au module d'allongement MA10 de la composition élastomère constituant le volume principal, plus préférablement inférieur d'au moins 30 % au module d'allongement MA10 de la composition élastomère constituant le volume principal.

Dans un autre mode de réalisation préféré, le volume intermédiaire est exposé au niveau de la face intérieure au moins partiellement, et le volume principal est placé axialement vers l'extérieur vis-à-vis du volume intermédiaire.

Avec cette structure, une résistance efficace et effective à l'attaque mécanique du câble tracteur est possible, puisqu'il est possible de placer le volume principal là où un matériau à module élevé est le plus approprié pour réduire la déformation du dispositif (garniture).

Dans un autre mode de réalisation préféré, le volume principal est placé axialement vers l'extérieur à la fois vis-à-vis du volume extérieur et vis-à-vis du volume intermédiaire.

Avec cette structure, la possibilité d'obtenir une résistance efficace et effective à l'attaque mécanique du câble tracteur est meilleure, puisqu'il est possible de placer le volume principal là où un matériau à module élevé est le plus approprié pour réduire la déformation du dispositif (garniture).

Dans un autre mode de réalisation préféré, le volume principal est exposé au niveau de la face extérieure au moins partiellement.

Avec cette structure, la possibilité d'obtenir une résistance efficace et effective à l'attaque mécanique du câble tracteur est encore meilleure, puisqu'il est possible de placer le volume principal là où un matériau à module élevé est le plus approprié pour réduire la déformation du dispositif (garniture).

Dans un autre mode de réalisation préféré, le volume extérieur est pourvu d'un renfort de volume extérieur placé le long d'une périphérie extrême intérieure du volume extérieur et de façon à couvrir au moins la périphérie extrême intérieure du volume extérieur correspondant à la gorge, un allongement à la rupture d'une composition élastomère constituant le renfort de volume extérieur est au moins égal à 200 %, une épaisseur radiale (tor) mesurée au niveau du centre axial de la gorge est au plus égale à 0,1 fois l'épaisseur (t) du dispositif.

Avec cette structure, il est possible d'améliorer la résistance à l'usure et aux fissures du dispositif (garniture) puisque le renfort de volume extérieur dissipe efficacement l'énergie transmise par le câble tracteur du fait du contact cyclique du dispositif (garniture) avec le câble tracteur.

Si l'allongement à la rupture de la composition élastomère constituant le renfort de volume extérieur est inférieur à 200 %, il existe un risque que la dissipation d'énergie par ce renfort de volume extérieur devienne insuffisante. En établissant cet allongement à la rupture de la composition élastomère constituant le renfort de volume extérieur de sorte qu'il soit d'au moins 200 %, il est possible d'améliorer la résistance à l'usure et aux fissures du dispositif (garniture).

Cet allongement à la rupture de la composition élastomère constituant le renfort de volume extérieur est, de préférence, d'au moins 300 %, plus préférablement d'au moins 400 % et encore plus préférablement d'au moins 500 %.

Si l'épaisseur radiale (tor) mesurée au niveau du centre axial de la gorge est supérieure à 0,1 fois l'épaisseur (t) du dispositif, il existe un risque qu'une dissipation de chaleur du dispositif devienne insuffisante et que ceci mène à une dégradation de l'endurance du dispositif étant donné que la composition de caoutchouc constituant ce renfort de volume extérieur est dissipative. En établissant cette épaisseur radiale (tor) mesurée au niveau du centre axial de la gorge de sorte qu'elle soit au plus égale à 0,1 fois l'épaisseur (t) du dispositif, une amélioration en termes de résistance à la fatigue mécanique du dispositif (garniture) est possible.

Avec les structures décrites ci-dessus, il est possible d'obtenir un dispositif destiné à former le dispositif (garniture) de la poulie de guidage de câble, et ce dispositif (garniture) peut offrir une amélioration en termes de résistance à l'attaque mécanique du câble tracteur tout en maintenant l'adhérence avec le câble tracteur.

D'autres caractéristiques et avantages de l'invention ressortent de la description faite ci-après en se reportant aux dessins joints qui illustrent, à titre d'exemples non limitatifs, le mode de réalisation de l'invention.

Dans ces dessins :
la Fig. 1 est une vue en coupe schématique d'un dispositif avec une poulie de guidage de câble ;
la Fig. 2 est une vue en coupe schématique d'un dispositif;
la Fig. 3 est une vue en coupe schématique d'un dispositif;
la Fig. 4 est une vue en coupe schématique d'un dispositif selon un quatrième mode de réalisation de la présente invention ;
la Fig. 5 est une vue en coupe schématique d'un dispositif;

Des modes de réalisation préférés de la présente invention vont être décrits ci-dessous en se reportant aux dessins.

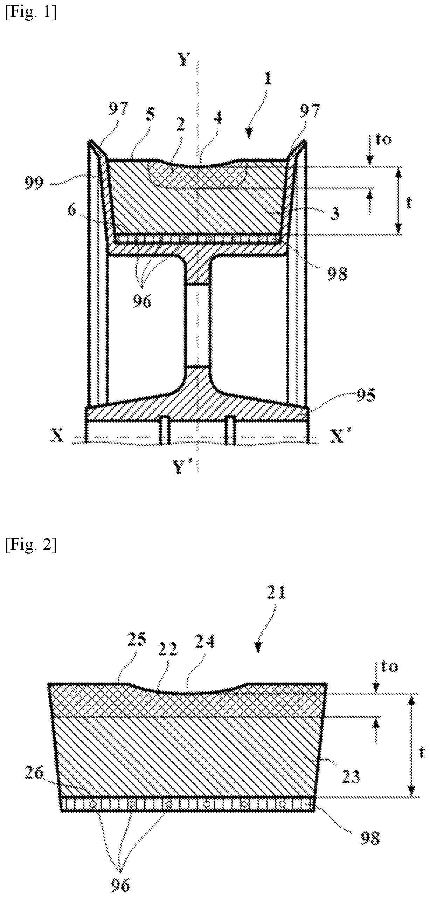

Un dispositif 1 va être décrit en se reportant à la Fig. 1.

La Fig. 1 est une vue en coupe schématique d'un dispositif 1 avec une poulie de guidage de câble 99 selon un premier mode de réalisation de la présente invention.

La poulie de guidage de câble 99 ayant un axe de rotation XX', et comprenant deux joues 97 axialement distantes et définissant une extrémité axiale de la poulie de guidage de câble 99 et un moyeu 95 par le biais duquel la poulie de guidage de câble 99 est installée, de façon à être rotative, sur un arbre fixe le long de l'axe de rotation XX'.

Un dispositif 1 est un dispositif destiné à former une garniture de la poulie de guidage de câble 99 au niveau d'une partie située radialement vers l'extérieur de la poulie de guidage de câble 99 entourée par deux joues 97. Le dispositif 1 (garniture) comporte une face extérieure 5 pourvue d'une gorge 4 destinée à être en contact avec un câble (non illustré) et une face intérieure 6 destinée à être en contact avec une couche de semelle 98 qui serait en contact avec la poulie de guidage de câble 99. La couche de semelle 98 est renforcée par une pluralité de renforts de semelle 96. Un exemple du renfort de semelle 96 est un câble, un fil ou une feuille métallique ou textile avec des brins droits ou ondulés, s'étendant à un angle ou non en suivant l'orientation circonférentielle.

Le dispositif 1 (garniture) présente une épaisseur (t) mesurée entre la partie radialement extrême extérieure de la face extérieure 5 et la partie radialement extrême intérieure de la face intérieure 6 au niveau d'un centre axial du dispositif 1 (garniture) indiqué par YY'. Dans le présent mode de réalisation, le centre axial du dispositif 1 (garniture) coïncide avec un centre axial de la gorge 4.

Le dispositif 1 (garniture) comprend 2 volumes, un volume extérieur 2 exposé au niveau de la face extérieure 5 au moins partiellement et contenant la gorge 4, et un volume principal 3 exposé au niveau de la face intérieure 6 au moins partiellement. Le volume extérieur 2 et le volume principal 3 sont faits de compositions élastomères différentes.

Un module d'allongement MA10 selon ASTM D412 mesuré pour un allongement de 10 pour cent (10 %) et à une température de 23 °C d'une composition élastomère constituant le volume extérieur 2 est inférieur au module d'allongement MA10 d'une composition élastomère constituant le volume principal 3.

Une épaisseur radiale (to) du volume extérieur 2 mesurée au niveau du centre axial de la gorge 4 est inférieure à 0,5 fois l'épaisseur (t) du dispositif 1 (garniture).

L'épaisseur radiale (to) du volume extérieur 2 est supérieure à 0,1 fois l'épaisseur (t) du dispositif 1 (garniture). Dans le présent mode de réalisation, l'épaisseur (to) du volume extérieur 2 est égale à 0,3 fois l'épaisseur (t) du dispositif 1 (garniture).

Le module d'allongement MA10 de la composition élastomère constituant le volume principal 3 est supérieur d'au moins 25 % au module d'allongement MA10 de la composition élastomère constituant le volume extérieur 2. Dans le présent mode de réalisation, le module d'allongement MA10 de la composition élastomère constituant le volume extérieur 2 est de 8 MPa, et le module d'allongement MA10 de la composition élastomère constituant le volume principal 3 est de 10 MPa, soit supérieur de 25 % à celui du volume extérieur 2.

Le volume intérieur 3 est exposé au niveau de la totalité de la face intérieure 6, et le volume principal 3 est exposé au niveau de la face extérieure 5 au moins partiellement.

Étant donné que le dispositif 1 (garniture) comprenant au moins 2 volumes, le volume extérieur 2 exposé au niveau de la face extérieure 5 au moins partiellement et contenant la gorge 4, et le volume principal 3 exposé au niveau de la face intérieure 6 au moins partiellement, et le module d'allongement MA10 selon ASTM D412 mesuré pour un allongement de 10 pour cent (10 %) et à une température de 23 °C de la composition élastomère constituant le volume extérieur 2 est inférieur au module d'allongement MA10 de la composition élastomère constituant le volume principal 3, le module MA10 inférieur a de meilleures caractéristiques en termes d'allongement avant rupture associées à une plus grande résistance à la fatigue pour un niveau imposé de déformation. Une résistance à l'attaque mécanique du câble tracteur est, par conséquent, possible.

D'autre part, étant donné que la composition élastomère ayant le module MA10 inférieur a de meilleures propriétés d'acheminement de câble. Par conséquent, il est possible, simultanément, de maintenir et même d'améliorer l'adhérence avec le câble tracteur.

En outre, étant donné que le module MA10 supérieur de la composition élastomère constituant le volume principal 3 réduit la déformation du dispositif 1 (garniture), il en résulte que le volume principal 3 subirait une fatigue moindre. Une résistance à l'attaque mécanique du câble tracteur est, par conséquent, possible.

Si le module d'allongement MA10 du volume extérieur 2 est supérieur au module d'allongement MA10 du volume principal 3, les propriétés d'acheminement de câble du dispositif 1 (garniture) deviennent inappropriées, ce qui entraîne une génération plus rapide de fissures sur la surface du dispositif 1 (garniture).

Étant donné que l'épaisseur radiale (to) du volume extérieur 2 mesurée au niveau du centre axial de la gorge 4 est inférieure à 0,5 fois l'épaisseur (t) du dispositif 1 (garniture), le dispositif 1 (garniture) subirait globalement une fatigue moindre. Une résistance à l'attaque mécanique du câble tracteur est, par conséquent, possible.

Étant donné que l'épaisseur radiale (to) du volume extérieur 2 est supérieure à 0,1 fois l'épaisseur (t) du dispositif 1 (garniture), une résistance à l'attaque mécanique du câble tracteur est possible tout en maintenant l'adhérence avec le câble tracteur.

Si cette épaisseur radiale (to) du volume extérieur 2 est inférieure ou égale à 0,1 fois l'épaisseur (t) du dispositif 1 (garniture), il existe un risque que le volume du volume extérieur 2 devienne insuffisant pour résister à la fatigue provoquée par la déformation imposée par le câble tracteur.

Cette épaisseur radiale (to) du volume extérieur 2 est, de préférence, supérieure à 0,15 fois l'épaisseur (t) du dispositif 1 (garniture), plus préférablement supérieure à 0,2 fois l'épaisseur (t) du dispositif 1 (garniture), encore plus préférablement supérieure à 0,25 fois l'épaisseur (t) du dispositif 1 (garniture) et, en particulier, supérieure à 0,3 fois l'épaisseur (t) du dispositif 1 (garniture).

Étant donné que le module d'allongement MA10 de la composition élastomère constituant le volume principal 3 est supérieur d'au moins 25 % au module d'allongement MA10 de la composition élastomère constituant le volume extérieur 2, une résistance à l'attaque mécanique du câble tracteur est possible.

Si ce module d'allongement MA10 de la composition élastomère constituant le volume principal 3 est supérieur de moins de 25 % au module d'allongement MA10 de la composition élastomère constituant le volume extérieur 2, il existe un risque que la réduction de la déformation au niveau du volume principal 3 devienne insuffisante pour subir une fatigue moindre.

Ce module d'allongement MA10 de la composition élastomère constituant le volume principal 3 est, de préférence, supérieur d'au moins 30 % au module d'allongement MA10 de la composition élastomère constituant le volume extérieur 2, plus préférablement supérieur d'au moins 35 % au module d'allongement MA10 de la composition élastomère constituant le volume extérieur 2, encore plus préférablement supérieur d'au moins 40 % au module d'allongement MA10 de la composition élastomère constituant le volume extérieur 2.

Un module d'allongement MA10 préféré de la composition élastomère constituant le volume extérieur 2 est inférieur ou égal à 8,0 MPa, plus préférablement inférieur ou égal à 7,0 MPa et encore plus préférablement inférieur ou égal à 6,0 MPa.

Un module d'allongement MA10 préféré de la composition élastomère constituant le volume principal 3 est supérieur ou égal à 10,0 MPa, plus préférablement supérieur ou égal à 12,0 MPa et encore plus préférablement supérieur ou égal à 14,0 MPa.

Étant donné que le volume intérieur 3 est exposé au niveau de la totalité de la face intérieure 6, il est possible de fabriquer le dispositif 1 (garniture) facilement et efficacement.

Étant donné que le volume principal 3 est exposé au niveau de la face extérieure 5 au moins partiellement, une résistance efficace et effective à l'attaque mécanique du câble tracteur est possible, puisqu'il est possible de placer le volume principal 3 là où un matériau à module élevé est le plus approprié pour réduire la déformation du dispositif 1 (garniture).

Le dispositif 1 (garniture), la poulie de guidage de câble 99, un contour de la face extérieure 5 et la gorge 4 peuvent être dotés de toute forme appropriée, y compris de façon asymétrique.

Une interface entre le volume extérieur 2 et le volume principal 3, entre le volume principal 3 et la couche de semelle 98 peuvent présenter n'importe quelle forme, par exemple droite, ondulée, en zigzag ou conique.

Le dispositif 1 (garniture) peut être tel qu'il se place partiellement vers l'extérieur radialement vis-à-vis de la joue 97.

La poulie de guidage de câble 99 est, de préférence, faite d'un matériau sélectionné parmi l'acier ou des alliages d'aluminium et/ou de magnésium, des matériaux composites à base de fibre de carbone, de fibre de verre, de fibre aramide, de fibre végétale, lesdites fibres étant incorporées dans une matrice à base de composés thermodurcissables ou thermoplastiques, ou un composite complexe comprenant un élastomère et un complexe à base de résine et de fibres sélectionnées parmi des fibres de carbone, des fibres de verre, des fibres aramides, des fibres végétales ou toute combinaison de ces matériaux.

La matrice à base de composés thermodurcissables est sélectionnée parmi les résines époxy, l'ester vinylique, les polyesters insaturés, le cyanate ester, le bismaléimide, les résines acryliques, les résines phénoliques, les polyuréthanes et leurs combinaisons.

La matrice à base de composés thermoplastiques est sélectionnée parmi le polypropylène (PP), le polyéthylène (PE), les polyamides (PA), les polyamides semi-aromatiques, le polyester (PET), le poly(téréphtalate de butylène) (PBT), la polyétheréthercétone (PEEK), la polyéthercétonecétone (PEKK), la polyéthersulfone (PSU), le polyétherimide (PEI), le polyimide (PI), le polyamideimide (PAI), le poly(sulfure de phénylène) (PPS), le polyoxyméthylène (POM), le poly(oxyde de phénylène) (PPO).

La composition élastomère pour le dispositif 1 (garniture) peut être faite d'élastomères tels que des caoutchoucs qui peuvent être réticulés par des réactions de vulcanisation chimique par des ponts de soufre, par des liaisons carbone-carbone créées par l'action de peroxydes ou d'un rayonnement ionisant, par d'autres chaînes d'atomes spécifiques du module élastomère, d'élastomères thermoplastiques (TPE) dans lesquels la partie déformable élastiquement forme un réseau entre des régions « dures » relativement non déformables, dont la cohésion est le produit de liaisons physiques (cristallites ou régions amorphes au-dessus de leur température de transition vitreuse), d'élastomères non thermoplastiques et de résines thermodurcies.

Un dispositif 21 (garniture) va être décrit en se reportant à la Fig. 2. La Fig. 2 est une vue en coupe schématique d'un dispositif selon un deuxième mode de réalisation de la présente invention. La construction de ce deuxième mode de réalisation est similaire à celle du premier mode de réalisation si ce n'est quant à la structure illustrée sur la Fig. 2, et la description sera donc faite en se reportant à la Fig. 2.

Comme illustré sur la Fig. 2, le dispositif 21 (garniture) comporte une face extérieure 25 pourvue d'une gorge 24 destinée à être en contact avec un câble (non illustré) et une face intérieure 26 destinée à être en contact avec une couche de semelle 98 qui est renforcée avec une pluralité de renforts de semelle 96 et serait en contact avec la poulie de guidage de câble (non illustrée), le dispositif 21 (garniture) présentant une épaisseur (t) mesurée entre la partie radialement extrême extérieure de la face extérieure 25 et la partie radialement extrême intérieure de la face intérieure 26 au niveau d'un centre axial du dispositif 21 (garniture), le dispositif 21 (garniture) comprend 2 volumes, un volume extérieur 22 entièrement exposé au niveau de la face extérieure 25 et contenant la gorge 24, et un volume principal 23 entièrement exposé au niveau de la face intérieure 26, le volume extérieur 22 et le volume principal 23 étant faits de compositions élastomères différentes.

Le volume extérieur 22 et le volume principal 23 étant faits de compositions élastomères différentes, un module d'allongement MA10 selon ASTM D412 mesuré pour un allongement de 10 pour cent et à une température de 23 °C d'une composition élastomère constituant le volume extérieur 22 est inférieur au module d'allongement MA10 d'une composition élastomère constituant le volume principal 23.

Comme illustré sur la Fig. 2, une épaisseur radiale (to) du volume extérieur 22 mesurée au niveau du centre axial de la gorge 24 est inférieure à 0,5 fois l'épaisseur (t) du dispositif 21 (garniture).

Comme illustré sur la Fig. 2, le volume extérieur 22 est exposé au niveau de la totalité de la face extérieure 25.

Étant donné que le dispositif 21 (garniture) comprenant au moins 2 volumes, le volume extérieur 22 exposé au niveau de la face extérieure 25 et contenant la gorge 24, et le volume principal 23 exposé au niveau de la face intérieure 26, et le module d'allongement MA10 selon ASTM D412 mesuré pour un allongement de 10 pour cent et à une température de 23 °C de la composition élastomère constituant le volume extérieur 22 est inférieur au module d'allongement MA10 de la composition élastomère constituant le volume principal 23, le module MA10 inférieur a de meilleures caractéristiques en termes d'allongement avant rupture associées à une plus grande résistance à la fatigue pour un niveau imposé de déformation. Une résistance à l'attaque mécanique du câble tracteur est, par conséquent, possible.

D'autre part, étant donné que la composition élastomère ayant le module MA10 inférieur a de meilleures propriétés d'acheminement de câble. Par conséquent, il est possible, simultanément, de maintenir et même d'améliorer l'adhérence avec le câble tracteur.

En outre, étant donné que le module MA10 supérieur de la composition élastomère constituant le volume principal 23 réduit la déformation du dispositif 21 (garniture), il en résulte que le volume principal 23 subirait une fatigue moindre. Une résistance à l'attaque mécanique du câble tracteur est, par conséquent, possible.

Étant donné que l'épaisseur radiale (to) du volume extérieur 22 mesurée au niveau du centre axial de la gorge 24 est inférieure à 0,5 fois l'épaisseur (t) du dispositif 21 (garniture), le dispositif 21 (garniture) subirait globalement une fatigue moindre. Une résistance à l'attaque mécanique du câble tracteur est, par conséquent, possible.

Étant donné que le volume extérieur 22 est exposé au niveau de la totalité de la face extérieure 25, il est possible de fabriquer le dispositif 21 (garniture) facilement et efficacement.

Une interface entre le volume extérieur 22 et le volume principal 23, entre le volume principal 23 et la couche de semelle 98 peuvent présenter n'importe quelle forme, par exemple droite, ondulée, en zigzag ou conique.

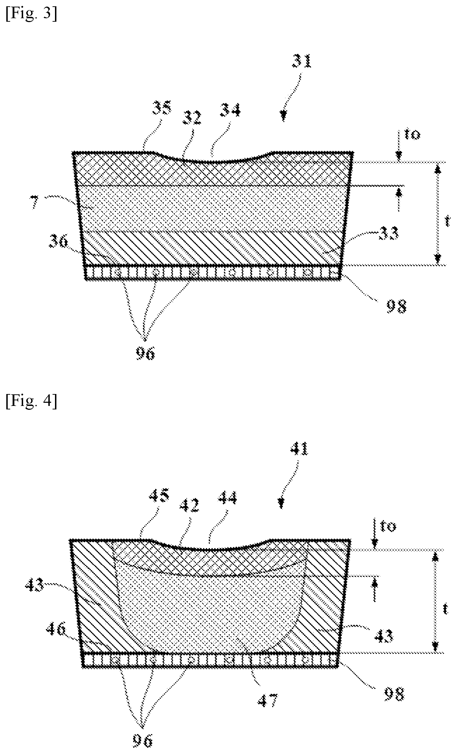

Un dispositif 31 (garniture) selon un mode de réalisation de la présente invention va être décrit en se reportant à la Fig. 3. La Fig. 3 est une vue en coupe schématique d'un dispositif selon un troisième mode de réalisation de la présente invention. La construction de ce troisième mode de réalisation est similaire à celles des premier et deuxième modes de réalisation si ce n'est quant à la structure illustrée sur la Fig. 3, et la description sera donc faite en se reportant à la Fig. 3.

Comme illustré sur la Fig. 3, le dispositif 31 (garniture) comporte une face extérieure 35 pourvue d'une gorge 34 destinée à être en contact avec un câble (non illustré) et une face intérieure 36 destinée à être en contact avec une couche de semelle 98 qui est renforcée avec une pluralité de renforts de semelle 96 et serait en contact avec la poulie de guidage de câble (non illustrée), le dispositif 31 (garniture) présentant une épaisseur (t) mesurée entre la partie radialement extrême extérieure de la face extérieure 35 et la partie radialement extrême intérieure de la face intérieure 36 au niveau d'un centre axial du dispositif 31 (garniture), le dispositif 31 (garniture) comprend 3 volumes, un volume extérieur 32 entièrement exposé au niveau de la face extérieure 35 et contenant la gorge 34, un volume principal 33 entièrement exposé au niveau de la face intérieure 36 et un volume intermédiaire 7 non exposé au niveau de la face extérieure 35, le volume extérieur 32, le volume principal 33 et le volume intermédiaire 7 étant faits de compositions élastomères différentes. Une interface entre le volume extérieur 32 et le volume intermédiaire 7, et une interface entre le volume intermédiaire 7 et le volume principal 33 présentent toutes deux une forme droite.

Le volume extérieur 32 et le volume principal 33 étant faits de compositions élastomères différentes, un module d'allongement MA10 selon ASTM D412 mesuré pour un allongement de 10 pour cent et à une température de 23 °C d'une composition élastomère constituant le volume extérieur 32 est inférieur au module d'allongement MA10 d'une composition élastomère constituant le volume principal 33. Un module d'allongement MA10 d'une composition élastomère constituant le volume intermédiaire 7 est inférieur à celui de la composition élastomère constituant le volume principal 33 et supérieur à celui de la composition élastomère constituant le volume extérieur 32. Le module d'allongement MA10 de la composition élastomère constituant le volume intermédiaire 7 est inférieur d'au moins 20 % au module d'allongement MA10 de la composition élastomère constituant le volume principal 33. Dans le présent mode de réalisation, le module d'allongement MA10 de la composition élastomère constituant le volume extérieur 32 est de 6 MPa, et le module d'allongement MA10 de la composition élastomère constituant le volume principal 33 est de 12 MPa, soit supérieur de 100% à celui du volume extérieur 32. Le module d'allongement MA10 de la composition élastomère constituant le volume intermédiaire 7 est de 10 MPa, soit inférieur de 20 % à celui du volume principal 33.

Comme illustré sur la Fig. 3, une épaisseur radiale (to) du volume extérieur 32 mesurée au niveau du centre axial de la gorge 34 est inférieure à 0,5 fois l'épaisseur (t) du dispositif 31 (garniture).

Étant donné que le dispositif 31 (garniture) comprend en outre le volume intermédiaire 7 non exposé au niveau de la face extérieure 35, et qu'une composition élastomère constituant le volume intermédiaire 7 est différente à la fois de la composition élastomère constituant le volume extérieur 32 et de la composition élastomère constituant le volume principal 33, une résistance efficace et effective à l'attaque mécanique du câble tracteur est possible, puisqu'il est possible de conférer une fonction différente à la composition élastomère constituant le volume intermédiaire 7, telle qu'une faible perte d'énergie afin de limiter la surchauffe ou un module propre à supporter des charges afin de limiter la déformation du dispositif 31 (garniture).

Étant donné que le module d'allongement MA10 de la composition élastomère constituant le volume intermédiaire 7 est inférieur à celui de la composition élastomère constituant le volume principal 33 et supérieur à celui de la composition élastomère constituant le volume extérieur 32, une résistance efficace et effective à l'attaque mécanique du câble tracteur est possible, puisque le volume intermédiaire 7 peut être apte à supporter des charges afin de limiter la déformation du dispositif 31 (garniture).

Étant donné que le module d'allongement MA10 de la composition élastomère constituant le volume intermédiaire 7 est inférieur d'au moins 20 % au module d'allongement MA10 de la composition élastomère constituant le volume principal 33, une résistance efficace à l'attaque mécanique du câble tracteur est possible.

Si ce module d'allongement MA10 de la composition élastomère constituant le volume intermédiaire 7 est inférieur de moins de 20 % au module d'allongement MA10 de la composition élastomère constituant le volume principal 33, il existe un risque que le volume intermédiaire 7 ne puisse pas bien contribuer à la résistance à l'attaque mécanique du câble tracteur.

Ce module d'allongement MA10 de la composition élastomère constituant le volume intermédiaire 7 est, de préférence, inférieur d'au moins 25 % au module d'allongement MA10 de la composition élastomère constituant le volume principal 33, plus préférablement inférieur d'au moins 30 % au module d'allongement MA10 de la composition élastomère constituant le volume principal 33.

Un dispositif 41 (garniture) selon un quatrième mode de réalisation de la présente invention va être décrit en se reportant à la Fig. 4. La Fig. 4 est une vue en coupe schématique d'un dispositif selon un quatrième mode de réalisation de la présente invention. La construction de ce quatrième mode de réalisation est similaire à celles des premier, deuxième et troisième modes de réalisation si ce n'est quant à la structure illustrée sur la Fig. 4, et la description sera donc faite en se reportant à la Fig. 4.

Comme illustré sur la Fig. 4, le dispositif 41 (garniture) comporte une face extérieure 45 pourvue d'une gorge 44 destinée à être en contact avec un câble (non illustré) et une face intérieure 46 destinée à être en contact avec une couche de semelle 98 qui est renforcée avec une pluralité de renforts de semelle 96 et serait en contact avec la poulie de guidage de câble (non illustrée), le dispositif 41 (garniture) présentant une épaisseur (t) mesurée entre la partie radialement extrême extérieure de la face extérieure 45 et la partie radialement extrême intérieure de la face intérieure 46 au niveau d'un centre axial du dispositif 41 (garniture), le dispositif 41 (garniture) comprend 3 volumes, un volume extérieur 42 partiellement exposé au niveau de la face extérieure 45 et contenant la gorge 44, un volume principal 43 partiellement exposé au niveau de la face intérieure 46 et un volume intermédiaire 47 non exposé au niveau de la face extérieure 45, le volume extérieur 42, le volume principal 43 et le volume intermédiaire 47 étant faits de compositions élastomères différentes.

Comme illustré sur la Fig. 4, le volume intermédiaire 47 est exposé au niveau de la face intérieure 46 au moins partiellement, et le volume principal 43 est placé axialement vers l'extérieur vis-à-vis du volume intermédiaire 47. De plus, le volume principal 43 est placé axialement vers l'extérieur à la fois vis-à-vis du volume extérieur 42 et vis-à-vis du volume intermédiaire 47 de façon à entourer le volume extérieur 42 et le volume intermédiaire 47. Le volume principal 43 est exposé au niveau de la face extérieure 45 au moins partiellement. Une interface entre le volume extérieur 42 et le volume intermédiaire 47 présente une forme incurvée, et une interface entre le volume principal 43 et à la fois le volume extérieur 42 et le volume intermédiaire 47 présente une forme parabolique.

Comme illustré sur la Fig. 4, une épaisseur radiale (to) du volume extérieur 42 mesurée au niveau du centre axial de la gorge 44 est inférieure à 0,5 fois l'épaisseur (t) du dispositif 41 (garniture).

Étant donné que le volume intermédiaire 47 est exposé au niveau de la face intérieure 46 au moins partiellement, et que le volume principal 43 est placé axialement vers l'extérieur vis-à-vis du volume intermédiaire 47, une résistance efficace et effective à l'attaque mécanique du câble tracteur est possible, puisqu'il est possible de placer le volume principal 43 là où un matériau à module élevé est le plus approprié pour réduire la déformation du dispositif 41 (garniture).

Étant donné que le volume principal 43 est placé axialement vers l'extérieur à la fois vis-à-vis du volume extérieur 42 et vis-à-vis du volume intermédiaire 47, la possibilité d'obtenir une résistance efficace et effective à l'attaque mécanique du câble tracteur est meilleure, puisqu'il est possible de placer le volume principal 43 là où un matériau à module élevé est le plus approprié pour réduire la déformation du dispositif 41 (garniture).

Étant donné que le volume principal 43 est exposé au niveau de la face extérieure 45 au moins partiellement, la possibilité d'obtenir une résistance efficace et effective à l'attaque mécanique du câble tracteur est encore meilleure, puisqu'il est possible de placer le volume principal 43 là où un matériau à module élevé est le plus approprié pour réduire la déformation du dispositif (garniture).

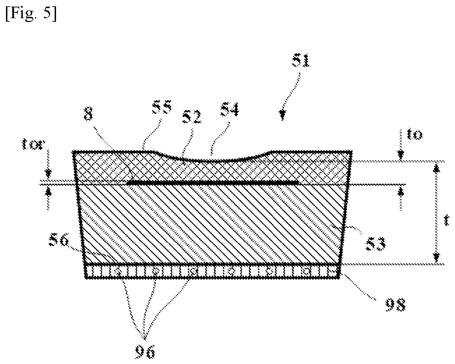

Un dispositif 51 (garniture) va être décrit en se reportant à la Fig. 5. La Fig. 5 est une vue en coupe schématique d'un dispositif selon un cinquième mode de réalisation de la présente invention. La construction de ce cinquième mode de réalisation est similaire à celles des premier, deuxième, troisième et quatrième modes de réalisation si ce n'est quant à la structure illustrée sur la Fig. 5, et la description sera donc faite en se reportant à la Fig. 5.

Comme illustré sur la Fig. 5, le dispositif 51 (garniture) comporte une face extérieure 55 pourvue d'une gorge 54 destinée à être en contact avec un câble (non illustré) et une face intérieure 56 destinée à être en contact avec une couche de semelle 98 qui est renforcée avec une pluralité de renforts de semelle 96 et serait en contact avec la poulie de guidage de câble (non illustrée), le dispositif 51 (garniture) présentant une épaisseur (t) mesurée entre la partie radialement extrême extérieure de la face extérieure 55 et la partie radialement extrême intérieure de la face intérieure 56 au niveau d'un centre axial du dispositif 51 (garniture), le dispositif 51 (garniture) comprend 2 volumes, un volume extérieur 52 entièrement exposé au niveau de la face extérieure 55 et contenant la gorge 54, et un volume principal 53 entièrement exposé au niveau de la face intérieure 56, le volume extérieur 52 et le volume principal 53 étant faits de compositions élastomères différentes.

Comme illustré sur la Fig. 5, le volume extérieur 52 est pourvu d'un renfort de volume extérieur 8 placé le long d'une périphérie extrême intérieure du volume extérieur 52 et de façon à couvrir au moins la périphérie extrême intérieure du volume extérieur 52 correspondant à la gorge 54. Un allongement à la rupture d'une composition élastomère constituant le renfort de volume extérieur 8 est au moins égal à 200 %.

Comme illustré sur la Fig. 5, une épaisseur radiale (tor) mesurée au niveau du centre axial de la gorge 54 est au plus égale à 0,1 fois l'épaisseur (t) du dispositif 51 (garniture).

Étant donné que le volume extérieur 52 est pourvu du renfort de volume extérieur 8 placé le long d'une périphérie extrême intérieure du volume extérieur 52 et de façon à couvrir au moins la périphérie extrême intérieure du volume extérieur 52 correspondant à la gorge 54 et que l'allongement à la rupture d'une composition élastomère constituant le renfort de volume extérieur 8 est au moins égal à 200 %, il est possible d'améliorer la résistance à l'usure et aux fissures du dispositif 51 (garniture) puisque le renfort de volume extérieur 8 dissipe efficacement l'énergie transmise par le câble tracteur du fait du contact cyclique du dispositif 51 (garniture) avec le câble tracteur.

Si l'allongement à la rupture de la composition élastomère constituant le renfort de volume extérieur 8 est inférieur à 200 %, il existe un risque que la dissipation d'énergie par ce renfort de volume extérieur 8 devienne insuffisante. En établissant cet allongement à la rupture de la composition élastomère constituant le renfort de volume extérieur 8 de sorte qu'il soit d'au moins 200 %, il est possible d'améliorer la résistance à l'usure et aux fissures du dispositif 51 (garniture).

Cet allongement à la rupture de la composition élastomère constituant le renfort de volume extérieur 8 est, de préférence, d'au moins 300 %, plus préférablement d'au moins 400 % et encore plus préférablement d'au moins 500 %.

Si l'épaisseur radiale (tor) mesurée au niveau du centre axial de la gorge 54 est supérieure à 0,1 fois l'épaisseur (t) du dispositif 51 (garniture), il existe un risque qu'une dissipation de chaleur du dispositif 51 (garniture) devienne insuffisante et que ceci mène à une dégradation de l'endurance du dispositif 51 (garniture) étant donné que la composition de caoutchouc constituant ce renfort de volume extérieur 8 est dissipative. En établissant cette épaisseur radiale (tor) mesurée au niveau du centre axial de la gorge 54 de sorte qu'elle soit au plus égale à 0,1 fois l'épaisseur (t) du dispositif 51 (garniture), une amélioration en termes de résistance à la fatigue mécanique du dispositif 51 (garniture) est possible.

Le renfort de volume extérieur 8 peut être placé le long de toute la périphérie extrême intérieure du volume extérieur 52 ou peut s'étendre jusqu'à une périphérie de tout autre volume en contact avec le volume extérieur 52. Le renfort de volume extérieur 8 peut, axialement d'une extrémité à une autre extrémité, se trouver à une distance radiale constante de la face extérieure 55, ou peut, axialement d'une extrémité à une autre extrémité, se trouver à une distance radiale variable de la face extérieure 55.

L'épaisseur (tor) du renfort de volume extérieur peut varier dans l'orientation axiale, ou peut présenter une valeur minimale de 1,0 mm.

L'invention ne se limite pas aux exemples décrits et représentés et diverses modifications peuvent être apportées sans s'écarter de sa portée.

Liste des signes de référence :

| | |
|---|---|
| • 1, 21, 31, 41, 51 | dispositif |
| • 2, 22, 32, 42, 52 | volume extérieur |
| • 3, 23, 33, 43, 53 | volume principal |
| • 4, 24, 34, 44, 54 | gorge |
| • 5, 25, 35, 45, 55 | face extérieure |
| • 6, 26, 36, 46, 56 | face intérieure |
| • 7, 47 | volume intermédiaire |
| • 8 | renfort de volume extérieur |
| • 95 | moyeu |
| • 96 | renfort de semelle |
| • 97 | joue |
| • 98 | couche de semelle |
| • 99 | poulie de guidage de câble |

## Revendications

1. Dispositif (41) destiné à former une garniture d'une poulie de guidage de câble (99), le dispositif (41) comportant une face extérieure (45) pourvue d'une gorge (44) destinée à être en contact avec un câble et une face intérieure (46) destinée à être en contact avec une couche de semelle (98) qui serait en contact avec la poulie de guidage de câble (99), le dispositif (41) présentant une épaisseur (t) mesurée entre la partie radialement extrême extérieure de la face extérieure (45) et la partie radialement extrême intérieure de la face intérieure (46) au niveau d'un centre axial du dispositif (41), le dispositif (41) comprenant au moins 2 volumes, un volume extérieur (42) exposé au niveau de la face extérieure (45) au moins partiellement et contenant la gorge (44), et un volume principal (43) exposé au niveau de la face intérieure (46) au moins partiellement, le volume extérieur (42) et le volume principal (43) étant faits de compositions élastomères différentes,
un module d'allongement MA10 selon ASTM D412 mesuré pour un allongement de 10 pour cent et à une température de 23 °C d'une composition élastomère constituant le volume extérieur (42) étant inférieur au module d'allongement MA10 d'une composition élastomère constituant le volume principal (43),
une épaisseur radiale (to) du volume extérieur (42) mesurée au niveau du centre axial de la gorge (44) étant inférieure à 0,5 fois l'épaisseur (t) du dispositif (41), le dispositif (41) comprenant en outre un volume intermédiaire (47) qui n'est pas exposé au niveau de la face extérieure (45), une composition élastomère constituant le volume intermédiaire (47) est différente à la fois de la composition élastomère constituant le volume extérieur (42) et de la composition élastomère constituant le volume principal (3), le dispositif étant **caractérisé en outre en ce que** un module d'allongement MA10 de la composition élastomère constituant le volume intermédiaire (47) est inférieur à celui de la composition élastomère constituant le volume principal (43) et supérieur à celui de la composition élastomère constituant le volume extérieur (42),
**et en ce que** le volume intermédiaire (47) est exposé au niveau de la face intérieure (46) au moins partiellement, et **dans lequel** le volume principal (43) est placé axialement vers l'extérieur vis-à-vis du volume intermédiaire (47).

2. Dispositif (41) selon la revendication 1, **dans lequel** l'épaisseur radiale (to) du volume extérieur (42) est supérieure à 0,1 fois l'épaisseur (t) du dispositif (41).

3. Dispositif (1) selon la revendication 1 ou la revendication 2, **dans lequel** le module d'allongement MA10 de la composition élastomère constituant le volume principal (43) est supérieur d'au moins 25 % au module d'allongement MA10 de la composition élastomère constituant le volume extérieur (2).

4. Dispositif (41) selon la revendication 1, **dans lequel** le module d'allongement MA10 de la composition élastomère constituant le volume intermédiaire (47) est inférieur d'au moins 20 % au module d'allongement MA10 de la composition élastomère constituant le volume principal (43).

5. Dispositif (41) selon la revendication 1, **dans lequel** le volume principal (43) est placé axialement vers l'extérieur à la fois vis-à-vis du volume extérieur (2) et vis-à-vis du volume intermédiaire (47).

6. Dispositif (41) selon la revendication 1, **dans lequel** le volume principal (43) est exposé au niveau de la face extérieure (45) au moins partiellement.

7. Dispositif (41) selon l'une quelconque des revendications 1 à 6, **dans lequel** le volume extérieur (42) est pourvu d'un renfort de volume extérieur (8) placé le long d'une périphérie extrême intérieure du volume extérieur (42) et de façon à couvrir au moins la périphérie extrême intérieure du volume extérieur (42) correspondant à la gorge (44), et **dans lequel** un allongement à la rupture d'une composition élastomère constituant le renfort de volume extérieur (42) est au moins égal à 200 %, et dans lequel une épaisseur radiale (tor) mesurée au niveau du centre axial de la gorge (4) est au plus égale à 0,1 fois l'épaisseur (t) du dispositif (41).

## Patentansprüche

1. Vorrichtung (41), die dazu bestimmt ist, einen Einsatz einer Seilführungsrolle (99) zu bilden, wobei die Vorrichtung (41) eine Außenfläche (45), die über eine Rille (44) verfügt, die dazu bestimmt ist, mit einem Seil in Kontakt zu sein, und eine Innenfläche (46), die dazu bestimmt ist, mit einer Sohlenschicht (98) in Kontakt zu sein, die mit der Seilführungsrolle (99) in Kontakt wäre, umfasst, wobei die Vorrichtung (41) eine Dicke (t) aufweist, die zwischen dem radial äußersten Teil der Außenfläche (45) und dem radial innersten Teil der Innenfläche (46) im Bereich einer axialen Mitte der Vorrichtung (41) gemessen wird, wobei die Vorrichtung (41) mindestens 2 Volumina beinhaltet, ein Außenvolumen (42), das im Bereich der Außenfläche (45) mindestens teilweise freiliegt und die Rille (44) enthält, und ein Hauptvolumen (43), das im Bereich der Innenfläche (46) mindestens teilweise freiliegt, wobei das Außenvolumen (42) und das Hauptvolumen (43) aus unterschiedlichen Elastomerzusammensetzungen hergestellt sind,
wobei ein Dehnungsmodul MA10 gemäß ASTM D412, gemessen für eine Dehnung von 10 Prozent und bei einer Temperatur von 23 °C, einer Elastomerzusammensetzung, die das Außenvolumen (42) bildet, kleiner ist als der Dehnungsmodul MA10 einer Elastomerzusammensetzung, die das Hauptvolumen (43) bildet,
wobei eine radiale Dicke (to) des Außenvolumens (42), gemessen im Bereich der axialen Mitte der Rille (44), weniger als das 0,5-fache der Dicke (t) der Vorrichtung (41) beträgt, wobei die Vorrichtung (41) ferner ein Zwischenvolumen (47) beinhaltet, das nicht im Bereich der Außenfläche (45) freiliegt, wobei sich eine Elastomerzusammensetzung, die das Zwischenvolumen (47) bildet, sowohl von der Elastomerzusammensetzung, die das Außenvolumen (42) bildet, als auch von der Elastomerzusammensetzung, die das Hauptvolumen (3) bildet, unterscheidet, wobei die Vorrichtung ferner **dadurch gekennzeichnet ist, dass** ein Dehnungsmodul MA10 der Elastomerzusammensetzung, die das Zwischenvolumen (47) bildet, kleiner ist als derjenige der Elastomerzusammensetzung, die das Hauptvolumen (43) bildet, und größer ist als derjenige der Elastomerzusammensetzung, die das Außenvolumen (42) bildet, und dass das Zwischenvolumen (47) im Bereich der Innenfläche (46) mindestens teilweise freiliegt, und wobei das Hauptvolumen (43) in Bezug auf das Zwischenvolumen (47) axial nach außen hin angeordnet ist.

2. Vorrichtung (41) nach Anspruch 1, wobei die radiale Dicke (to) des Außenvolumens (42) mehr als das 0,1-fache der Dicke (t) der Vorrichtung (41) beträgt.

3. Vorrichtung (1) nach Anspruch 1 oder Anspruch 2, wobei der Dehnungsmodul MA10 der Elastomerzusammensetzung, die das Hauptvolumen (43) bildet, um mindestens 25 % größer ist als der Dehnungsmodul MA10 der Elastomerzusammensetzung, die das Außenvolumen (2) bildet.

4. Vorrichtung (41) nach Anspruch 1, wobei der Dehnungsmodul MA10 der Elastomerzusammensetzung, die das Zwischenvolumen (47) bildet, um mindestens 20 % kleiner ist als der Dehnungsmodul MA10 der Elastomerzusammensetzung, die das Hauptvolumen (43) bildet.

5. Vorrichtung (41) nach Anspruch 1, wobei das Hauptvolumen (43) sowohl in Bezug auf das Außenvolumen (2) als auch in Bezug auf das Zwischenvolumen (47) axial nach außen hin angeordnet ist.

6. Vorrichtung (41) nach Anspruch 1, wobei das Hauptvolumen (43) im Bereich der Außenfläche (45) mindestens teilweise freiliegt.

7. Vorrichtung (41) nach einem der Ansprüche 1 bis 6, wobei das Außenvolumen (42) über eine Außenvolumenverstärkung (8) verfügt, die entlang eines innersten Randes des Außenvolumens (42) angeordnet ist und zwar so, dass sie mindestens den innersten Rand des Außenvolumens (42), der der Rille (44) entspricht, bedeckt, und wobei eine Bruchdehnung einer Elastomerzusammensetzung, die die Verstärkung des Außenvolumens (42) bildet, mindestens 200 % beträgt und wobei eine radiale Dicke (tor), gemessen im Bereich der axialen Mitte der Rille (4), höchstens das 0,1-fache der Dicke (t) der Vorrichtung (41) beträgt.

## Claims

1. Device (41) intended to form a lining of a cable guide pulley (99), the device (41) comprising an exterior face (45) provided with a groove (44) intended to be in contact with a cable, and an interior face (46) intended to be in contact with a sole layer (98) that would be in contact with the cable guide pulley (99), the device (41) having a thickness (t), measured between the radially exterior end part of the exterior face (45), and the radially interior end part of the interior face (46) at an axial centre of the device (41), the device (41) comprising at least 2 volumes, an exterior volume (42) that is at least partially exposed at the exterior face (45) and contains the groove (44), and a main volume (43) that is at least partially exposed at the interior face (46), the exterior volume (42) and the main volume (43) being made of different elastomer compositions,
a modulus of elongation MA10 according to ASTM D412 measured for an elongation of 10 percent and at a temperature of 23°C of an elastomer composition constituting the exterior volume (42) being lower than the modulus of elongation MA10 of an elastomer composition constituting the main volume (43),
a radial thickness (to) of the exterior volume (42) measured at the axial centre of the groove (44) being less than 0.5 times the thickness (t) of the device (41), the device (41) also comprising an intermediate volume (47) that is not exposed at the exterior face (45), an elastomer composition constituting the intermediate volume (47) is different both from the elastomer composition constituting the exterior volume (42) and from the elastomer composition constituting the main volume (3), the device also being **characterized in that** a modulus of elongation MA10 of the elastomer composition constituting the intermediate volume (47) is lower than that of the elastomer composition constituting the main volume (43) and higher than that of the elastomer composition constituting the exterior volume (42), and **in that** the intermediate volume (47) is at least partially exposed at the interior face (46), and wherein the main volume (43) is placed axially towards the exterior relative to the intermediate volume (47).

2. Device (41) according to Claim 1, wherein the radial thickness (to) of the exterior volume (42) is more than 0.1 times the thickness (t) of the device (41).

3. Device (1) according to Claim 1 or Claim 2, wherein the modulus of elongation MA10 of the elastomer composition constituting the main volume (43) is at least 25% higher than the modulus of elongation MA10 of the elastomer composition constituting the exterior volume (2).

4. Device (41) according to Claim 1, wherein the modulus of elongation MA10 of the elastomer composition constituting the intermediate volume (47) is at least 20% lower than the modulus of elongation MA10 of the elastomer composition constituting the main volume (43).

5. Device (41) according to Claim 1, wherein the main volume (43) is placed axially towards the exterior both relative to the exterior volume (2) and relative to the intermediate volume (47).

6. Device (41) according to Claim 1, wherein the main volume (43) is at least partially exposed at the exterior face (45).

7. Device (41) according to any one of Claims 1 to 6, wherein the exterior volume (42) is provided with an exterior volume reinforcement (8) placed along an interior end periphery of the exterior volume (42), and so as to cover at least the interior end periphery of the exterior volume (42) corresponding to the groove (44), and wherein an elongation at break of an elastomer composition constituting the exterior volume (42) reinforcement is at least equal to 200%, and wherein a radial thickness (tor) measured at the axial centre of the groove (4) is at most equal to 0.1 times the thickness (t) of the device (41).
